# EUROPEAN PATENT APPLICATION

(11) **EP 4 647 993 A1**
(43) Date of publication of application: **12.11.2025**
(21) Application number: 25175431.3
(22) Date of filing: 09.05.2025
(51) Int. Cl.: G06Q 20/38, G06Q 20/40, G06Q 20/42

(54) **SYSTEMS AND METHODS FOR PROTECTING VULNERABLE PERSONS FROM FRAUDULENT ACTIVITY**

(30) Priority: 09.05.2024 US 202463644685 P; 21.03.2025 US 202519086661
(71) Applicant: JPMorgan Chase Bank, N.A., New York, NY 10179 (US)
(72) Inventor: WEINGARD, Mitch, New York, 10179 (US); LONCARIC, Goran, New York, 10179 (US); GEAN, Gerardo, New York, 10179 (US); SPECTOR, Howard, New York, 10179 (US); HOGAN, Genevieve M, New York, 10179 (US)
(74) Representative: Patentanwälte Olbricht Buchhold Keulertz

(57) **Abstract**

Systems and methods for protecting vulnerable persons from fraudulent activity are disclosed. A method may include: (1) receiving, by a computer program executed by an electronic device, a transaction involving a person having a registered guardian; (2) determining, by the computer program, that the transaction requires guardian consent from the registered guardian; (3) communicating, by the computer program, a notification comprising a code to a registered guardian electronic device associated with the registered guardian; (4) receiving, by the computer program and from the person, the code; and (5) executing, by the computer program, the transaction in response to receiving the code.

## Description

### RELATED APPLICATIONS

This application claims priority to, and the benefit of, U.S. Provisional Patent Application Ser. No. 63/644,685, filed May 9, 2024, the disclosure of which is hereby incorporated, by reference, in its entirety.

### BACKGROUND OF THE INVENTION

### 1. Field of the Invention

Embodiments relate to systems and methods for protecting vulnerable persons from fraudulent activity.

### 2. Description of the Related Art

Certain people may be more vulnerable than others to attacks on their financial accounts. For example, there are a number of reports of individual people transferring money from their accounts under duress, such as those caused by unscrupulous actors. Making matters worse is that these individuals can be coerced into making a transfer using a payment application with little or no chance of recovering the money once the fraud is identified.

### SUMMARY OF THE INVENTION

Systems and methods for protecting vulnerable persons from fraudulent activity are disclosed. According to one embodiment, a method may include: (1) receiving, by a computer program executed by an electronic device, a transaction involving a person having a registered guardian; (2) determining, by the computer program, that the transaction requires guardian consent from the registered guardian; (3) communicating, by the computer program, a notification comprising a code to a registered guardian electronic device associated with the registered guardian; (4) receiving, by the computer program and from the person, the code; and (5) executing, by the computer program, the transaction in response to receiving the code.

In one embodiment, the transaction may include an online payment.

In one embodiment, the transaction may include an automated teller machine withdrawal.

In one embodiment, the step of determining that the transaction requires guardian consent may include: comparing, by the computer program, the transaction to a threshold. The threshold may be based on a transaction type, a transaction amount, a transaction time of day, a transaction location, a payee status, and a transaction velocity.

In one embodiment, the notification may include in-application message, a SMS/text message, and/or an interactive voice response system message, an identifier for the person and a portion of transaction information for the transaction, etc.

In one embodiment, the method may also include: not executing, by the computer program, the transaction in response to the code not being received.

According to another embodiment, a system may include: a guardian electronic device executing a guardian computer program for a registered guardian for a person; and an electronic device executing a computer program. The computer program receives a transaction involving the person; the computer program determines that the transaction requires guardian consent from the registered guardian; the computer program communicates a notification to the guardian electronic device; the guardian computer program receives the guardian consent from the guardian; the guardian computer program communicates the guardian consent to the computer program; and the guardian computer program executes the transaction in response to receiving the guardian consent.

In one embodiment, the transaction may include an online payment.

In one embodiment, the transaction may include an automated teller machine withdrawal.

In one embodiment, the computer program may determine that the transaction requires guardian consent by: comparing, by the computer program, the transaction to a threshold. The threshold may be based on a transaction type, a transaction amount, a transaction time of day, a transaction location, a payee status, and a transaction velocity.

In one embodiment, the notification may include in-application message, a SMS/text message, and/or an interactive voice response system message, an identifier for the person and a portion of transaction information for the transaction, etc.

In one embodiment, the method may also include: not executing, by the computer program, the transaction in response to the code not being received.

According to another embodiment, a method may include: (1) receiving, by a computer program executed by an electronic device, a transaction involving a person having a registered guardian; (2) determining, by the computer program, that the transaction requires guardian consent from the registered guardian; (3) communicating, by the computer program, a notification to a registered guardian electronic device associated with the registered guardian; (4) receiving, by the computer program and from the registered guardian electronic device, the guardian consent; and (5) executing, by the computer program, the transaction in response to receiving the guardian consent.

In one embodiment, the transaction may include an online payment or an automated teller machine withdrawal.

In one embodiment, the computer program determines that the transaction requires guardian consent by comparing the transaction to a threshold, wherein the threshold may be based on a transaction type, a transaction amount, a transaction time of day, a transaction location, a payee status, and a transaction velocity.

In one embodiment, the notification may include in-application message, a SMS/text message, and/or an interactive voice response system message, etc., and may further include an identifier for the person and a portion of transaction information for the transaction.

In one embodiment, the computer program does not execute the transaction in response to the guardian consent not being received.

### BRIEF DESCRIPTION OF THE DRAWINGS

For a more complete understanding of the present invention, the objects and advantages thereof, reference is now made to the following descriptions taken in connection with the accompanying drawings in which:
Figure 1 depicts a system for protecting vulnerable persons from fraudulent activity according to an embodiment;
Figure 2 depicts a method for protecting vulnerable persons from fraudulent activity according to an embodiment;
Figure 3 depicts an exemplary computing system for implementing aspects of the present disclosure.

### DETAILED DESCRIPTION OF PREFERRED EMBODIMENTS

Embodiments relate to systems and methods for protecting vulnerable persons from fraudulent activity. In embodiments, a vulnerable person may enroll another person - a guardian - to serve as a check for activity involving the vulnerable person's financial accounts or other accounts or property. The guardian may be a person trusted by the vulnerable person, such as an adult child, a sibling, a parent, etc. For example, in response to a vulnerable person requesting a transaction (e.g., a payment) to a third party, requesting a code for an identity challenge, receiving a push notification, attempting to withdraw money from an automatic teller machine (ATM), etc., the guardian may be provided with a code. Before the transaction is allowed to proceed, the vulnerable person may be required to enter the code that was provided to the guardian.

In order to retrieve the code from the guardian, the vulnerable person would need to contact the guardian, which should lead to a discussion on the proposed transaction. If the guardian consents to the transaction, the guardian may provide the code to the vulnerable person, and the transaction may proceed. If the guardian does not consent to the transaction, the guardian may withhold the code from the vulnerable person, and may instruct the vulnerable person to cancel the transaction, or to let the transaction expire.

In one embodiment, the vulnerable person may receive a first part of a code (e.g., the first half of a one-time passcode), and the guardian may receive the second part of the code (e.g., the second half of the one-time passcode). In order for the vulnerable person to enter the entire code, the guardian is required to communicate the code to the vulnerable person. The guardian may only provide the second part of the code if the guardian consents to the transaction.

In another embodiment, the guardian may be presented with an option to consent to or not consent to the transaction (e.g., via a push notification, responding to a SMS message sent to the guardian's electronic device, etc.), and the vulnerable person may be requested to contact the guardian for consent to the transaction. The vulnerable person should reach out to the guardian to discuss the transaction. If the guardian consents to the transaction (e.g., the guardian determines that the transaction is legitimate, or has another reason for consenting to the transaction, with or without contact from the vulnerable person), the guardian may consent to the transaction. If the guardian does not consent to the transaction (e.g., the guardian determines or suspects that the transaction is not legitimate, or has another reason for not consenting to the transaction), the guardian may not consent to the transaction and may instruct the vulnerable person to cancel the transaction.

In another embodiment, the guardian may receive some information regarding the transaction, such as the amount, the payee, etc. This may be provided, for example, to the guardian's electronic device by, for example, push notification, SMS message, email message, voice communication (e.g., an interactive voice response system), etc. In one embodiment, the information may be provided via a channel that may be able to receive a response (e.g., SMS, voice, etc.). If the guardian consents to the transaction, the guardian may respond to the notification with consent to the transaction without further discussion with the vulnerable person. If the guardian does not consent to the transaction, the guardian may respond to the notification by indicating no consent to the transaction. The guardian may also not consent to the transaction by not responding to the notification.

In one embodiment, the vulnerable person and/or the guardian may use electronic devices, such as computers (e.g., workstations, desktops, laptops, notebooks, tablets, etc.), smart devices (e.g., smart phones, smart watches, etc.), Internet of Things (IoT) devices, etc. In another embodiment, the vulnerable person and/or the guardian may use telephones that may interface with an agent, an interactive voice response system, etc.

As used herein, a vulnerable person may be any person for whom secondary review of a transaction may be helpful. This may include, for example, older people, children, anyone that feels that they would benefit from the secondary review, or anyone that a legal guardian or caregiver feels would benefit from a secondary review.

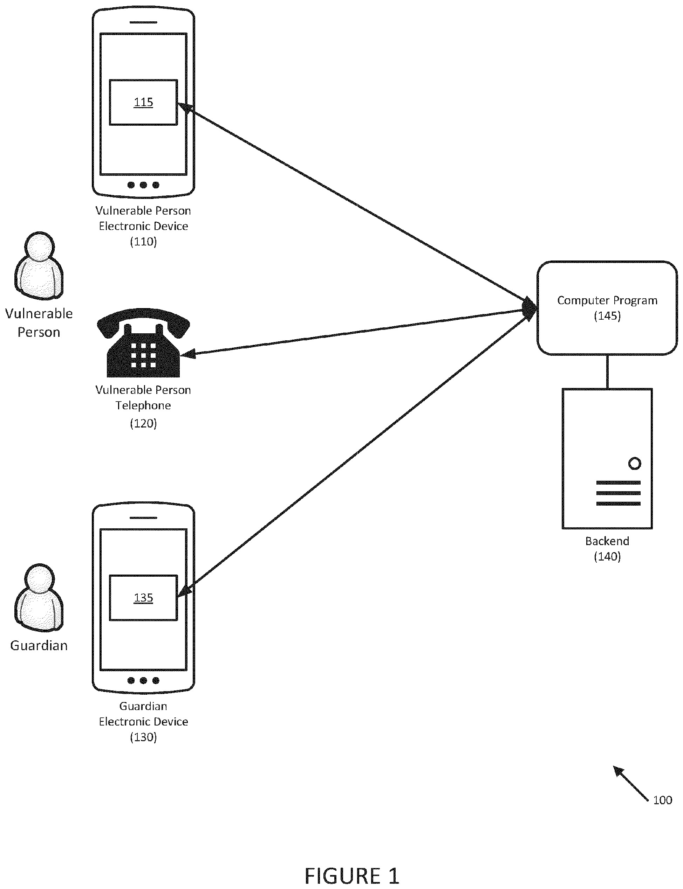

Referring to Figure 1, a system for protecting vulnerable persons from fraudulent activity is disclosed according to an embodiment. System 100 may include vulnerable person electronic device 110, guardian electronic device 130, backend 140, and computer program 145. In one embodiment, instead of, or in addition to, vulnerable person electronic device 110, vulnerable person telephone 120 may be provided, and may interface with an interactive voice response system, an agent, etc.

Vulnerable person electronic device 110 and guardian electronic device 130 may be any suitable electronic devices (e.g., workstations, computers, notebook computers, tablet computers, smart phones, smart watches, Internet of Things appliances, etc.

Vulnerable person electronic device 110 and guardian electronic device 130 may execute vulnerable person computer program 115 and guardian computer program 135, respectively. Vulnerable person computer program 115 and guardian computer program 135 may interface with computer program 145 executed by backend 140.

When a vulnerable person attempts to execute a transaction (e.g., an online transaction using a payment application, a bank application, etc. that may be executed by vulnerable person electronic device 110), withdraw funds from an ATM (not shown), make an online purchase, etc. computer program 145 may receive the transaction and may determine whether the transaction should be reviewed by the guardian for consent. In one embodiment, review preferences and/or thresholds may be set by the vulnerable person and/or the guardian, and may include, for example, transaction type (e.g., person-to-person payment), transaction amount, transaction time of day, location of vulnerable person electronic device, payee status (e.g., a known payee or a new payee), a velocity of transactions (e.g., many transactions within a short time period), whether the transaction fits into a current fraud pattern, etc. Any other suitable criterion, or combination, may be used to determine whether to review the transaction.

If the computer program determines that the transaction should be reviewed by a guardian for consent, the computer program may identify the enrolled guardian for the vulnerable person, and may send a notification to guardian electronic device 130. The notification may be sent to guardian computer program 135 as an in-application message, may be sent as a SMS/text message, an email message, a push message, a voice message, an interactive voice response system message, etc.

In embodiment, the guardian may receive a notification, but may not be required to take any action to consent to the transaction.

In one embodiment, the notification may include an identifier for the vulnerable person (e.g., first name and/or last name, a nickname, etc.). The notification may include at least some transaction information (e.g., payee name, transaction amount, etc.). Alternately, or in addition, the notification may include a code.

Guardian computer program 135 may allow the guardian to consent to, or to not consent to, the transaction within the program.

In one embodiment, the guardian may respond to the notification with a consent or a non-consent message. The guardian may also indicate non consent by not responding to the notification.

In another embodiment, only the code may be provided, and the guardian may decide whether or not to provide the code to the vulnerable person. The guardian should discuss the transaction with the vulnerable person before determining whether to consent to or not consent to the transaction.

If the vulnerable person is provided with the code, the vulnerable person may enter the code into vulnerable person computer program 115, or may reply to the notification with the code. In another embodiment, the vulnerable person may call a representative with the code. In still another embodiment, the vulnerable person may enter the code to an ATM, to a point of sale device at a merchant that may participate in a network with the issuer, etc.

If the guardian consents to the transaction, or the vulnerable person provides the correct code, computer program 145 may allow the transaction to proceed.

If the guardian does not consent to the transaction, or the vulnerable person provides the wrong code or does not provide a code, the transaction may be prevented, may time out, etc.

In another embodiment, the guardian may be a computer program that may be trained to detect stress or confusion using information from electronic devices that the vulnerable person may be wearing or using (e.g., smart phone, smart watch, etc.), security cameras in the vicinity of the vulnerable person, etc. It may then prevent a transaction in response to the detection.

If the guardian does not consent, or if the guardian does not respond, the vulnerable person may attempt to conduct the transaction by calling an agent, physically going to a branch, etc. The agents may be trained to identify fraudulent transactions, identify duress, etc. and may consent to the transaction in the absence of guardian consent.

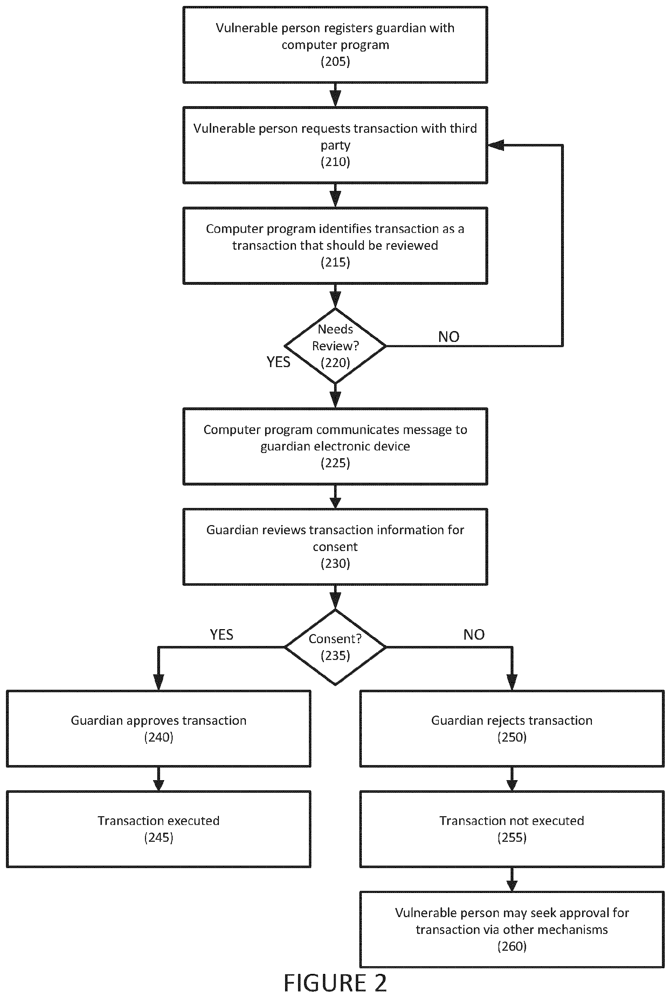

Referring to Figure 2, a method for protecting vulnerable persons from fraudulent activity is disclosed according to an embodiment.

In step 205, a vulnerable person may register a guardian with a computer program for an institution that may hold accounts for the vulnerable person, such as a bank. For example, the vulnerable person may provide the guardian's email address, phone number, etc.

In one embodiment, the guardian may also register an application, such as an application for the institution, so that the guardian may receive in-application messages.

In step 210, the vulnerable person may request a transaction with third party. For example, the vulnerable person may attempt to make a payment to a third party using a payment application.

In another embodiment, the vulnerable person may attempt to withdraw money from an ATM.

In step 215, the computer program may receive the transaction and may identify the transaction as a transaction that should be reviewed by the guardian for consent. For example, the computer program may apply review preferences that may be set by the vulnerable person and/or the guardian, such as transaction type (e.g., a payment, an ATM withdrawal, etc.), a transaction amount, a transaction time of day, a location of vulnerable person electronic device, a payee status (e.g., a known payee or a new payee), a velocity of transactions (e.g., many transactions within a short time period), whether the transaction fits into a current fraud pattern, etc. Any other suitable criterion, or combination, may be used to determine whether to review the transaction.

If, in step 220, the computer program determines that guardian review is necessary, in step 225, the computer program may communicate a notification to the guardian electronic device. The notification may be sent to guardian electronic device as an in-application message, a SMS/text message, a push message, a voice message in a phone call, an interactive voice response system message, etc.

In one embodiment, the notification may include an identifier for the vulnerable person (e.g., first name and/or last name, a nickname, etc.). The notification may include at least some transaction information (e.g., payee name, transaction amount, etc.). Alternately, or in addition, the notification may include a code.

In step 230, the guardian may review the transaction information for consent. For example, using the information in the notification, the guardian may decide whether to consent to, or not consent to, the transaction.

In another embodiment, if transaction information is not provided, the vulnerable person and the guardian may discuss the transaction, and may decide whether or not to consent to the transaction.

If, in step 235, the guardian consents to the transaction, in step 240, the guardian may consent to the transaction in the guardian computer program, may reply to the notification, may call an agent, etc. In one embodiment, the guardian may provide the code to the vulnerable person.

In step 245, the transaction may then be executed.

If, in step 235, the guardian does not consent to the transaction, in step 250, the guardian may enter non consent to the transaction in the guardian computer program, may reply to the notification with approval, may call an agent, etc. In one embodiment, the guardian may not provide the code to the vulnerable person, and/or may instruct the vulnerable person to cancel the transaction or to let the transaction expire.

In step 255, the transaction may not be executed, may time out, etc.

If the guardian does not consent, or if the guardian does not respond, in step 260, the vulnerable person may attempt to conduct the transaction by calling an agent, physically going to a branch, etc. The agents may be trained to identify fraudulent transactions, identify duress, etc. and may consent to the transaction in the absence of guardian consent.

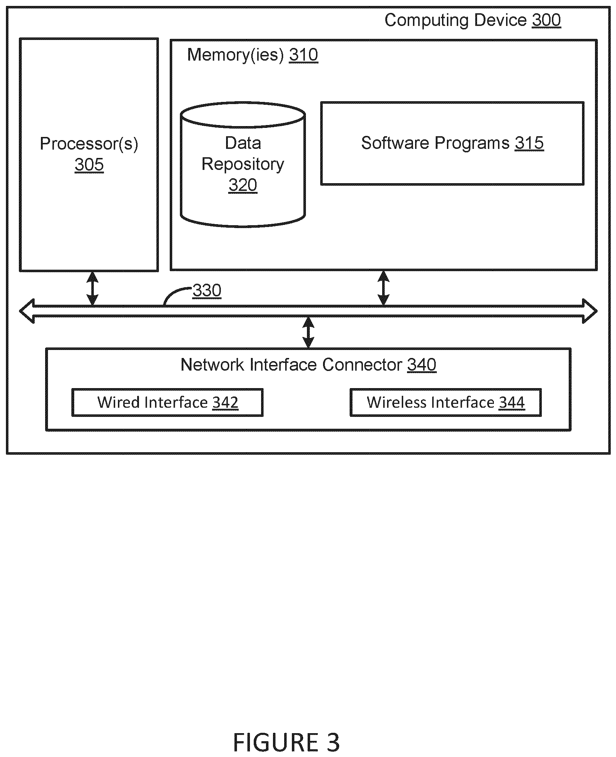

Figure 3 depicts an exemplary computing system for implementing aspects of the present disclosure. Figure 3 depicts exemplary computing device 300. Computing device 300 may represent the system components described herein. Computing device 300 may include processor 305 that may be coupled to memory 310. Memory 310 may include volatile memory. Processor 305 may execute computer-executable program code stored in memory 310, such as software programs 315. Software programs 315 may include one or more of the logical steps disclosed herein as a programmatic instruction, which may be executed by processor 305. Memory 310 may also include data repository 320, which may be nonvolatile memory for data persistence. Processor 305 and memory 310 may be coupled by bus 330. Bus 330 may also be coupled to one or more network interface connectors 340, such as wired network interface 342 or wireless network interface 344. Computing device 300 may also have user interface components, such as a screen for displaying graphical user interfaces and receiving input from the user, a mouse, a keyboard and/or other input/output components (not shown).

The disclosures of U.S. Provisional Patent Application Ser. No. 63/085,010 and U.S. Patent Application Ser. No. 17/487,808 are hereby incorporated, by reference, in their entities.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a computer program executed by an electronic device, a transaction involving a person having a registered guardian;
determining, by the computer program, that the transaction requires guardian consent from the registered guardian;
communicating, by the computer program, a notification comprising a code to a registered guardian electronic device associated with the registered guardian;
receiving, by the computer program and from the person, the code; and
executing, by the computer program, the transaction in response to receiving the code.

2. The method of claim 1, wherein the transaction comprises an online payment.

3. The method of claim 1, wherein the transaction comprises an automated teller machine withdrawal.

4. The method of claim 1, wherein the step of determining that the transaction requires guardian consent comprises:
comparing, by the computer program, the transaction to a threshold.

5. The method of claim 4, wherein the threshold is based on a transaction type, a transaction amount, a transaction time of day, a transaction location, a payee status, and a transaction velocity.

6. The method of claim 1, wherein the notification comprises in-application message, a SMS/text message, and/or an interactive voice response system message.

7. The method of claim 1, wherein the notification further comprises an identifier for the person and a portion of transaction information for the transaction.

8. The method of claim 1, further comprising:
not executing, by the computer program, the transaction in response to the code not being received.

9. A system, comprising:
a guardian electronic device executing a guardian computer program for a registered guardian for a person; and
an electronic device executing a computer program;
wherein:
the computer program receives a transaction involving the person;
the computer program determines that the transaction requires guardian consent from the registered guardian;
the computer program communicates a notification to the guardian electronic device;
the guardian computer program receives the guardian consent from the guardian;
the guardian computer program communicates the guardian consent to the computer program; and
the guardian computer program executes the transaction in response to receiving the guardian consent.

10. The system of claim 9, wherein the transaction comprises an online payment or an automated teller machine withdrawal.

11. The system of claim 9, wherein the computer program determines that the transaction requires guardian consent by comparing the transaction to a threshold.

12. The system of claim 11, wherein the threshold is based on a transaction type, a transaction amount, a transaction time of day, a transaction location, a payee status, and a transaction velocity.

13. The system of claim 9, wherein the notification comprises in-application message, a SMS/text message, and/or an interactive voice response system message.

14. The system of claim 9, wherein the notification further comprises an identifier for the person and a portion of transaction information for the transaction.

15. The system of claim 9, wherein the computer program does not execute the transaction in response to the guardian consent not being received.

16. A method, comprising:
receiving, by a computer program executed by an electronic device, a transaction involving a person having a registered guardian;
determining, by the computer program, that the transaction requires guardian consent from the registered guardian;
communicating, by the computer program, a notification to a registered guardian electronic device associated with the registered guardian;
receiving, by the computer program and from the registered guardian electronic device, the guardian consent; and
executing, by the computer program, the transaction in response to receiving the guardian consent.

17. The method of claim 16, wherein the transaction comprises an online payment or an automated teller machine withdrawal.

18. The method of claim 16, wherein the computer program determines that the transaction requires guardian consent by comparing the transaction to a threshold, wherein the threshold is based on a transaction type, a transaction amount, a transaction time of day, a transaction location, a payee status, and a transaction velocity.

19. The method of claim 16, wherein the notification comprises in-application message, a SMS/text message, and/or an interactive voice response system message, and further comprises an identifier for the person and a portion of transaction information for the transaction.

20. The method of claim 16, wherein the computer program does not execute the transaction in response to the guardian consent not being received.
